# FASCICULE DE BREVET EUROPEEN

(11) **EP 4 093 620 B1**
(45) Date de publication et mention de la délivrance du brevet: **04.02.2026**
(21) Numéro de dépôt: 20829295.3
(22) Date de dépôt: 17.12.2020
(51) Int. Cl.: B60C 23/04

(54) **PROCÉDÉ D'IDENTIFICATION DE CAPTEURS DE PRESSION ET DISPOSITIF POUR LA MISE EN OEUVRE DE CE PROCÉDÉ**
VERFAHREN ZUR ERKENNUNG VON DRUCKSENSOREN, UND VORRICHTUNG ZU DESSEN ERKENNUNG
METHOD FOR IDENTIFYING PRESSURE SENSORS, AND ASSOCIATED SYSTEM

(30) Priorité: 21.01.2020 FR 2000572
(43) Date de publication de la demande: 30.11.2022
(73) Titulaire: ATEQ, 78340 Les Clayes-sous-Bois (FR)
(72) Inventeur: BOUT, Michel, 78340 Les Clayes-sous-Bois (FR)
(74) Mandataire: Vidon Brevets & Stratégie
(86) Numéro de dépôt international: PCT/EP2020/086808
(87) Numéro de publication internationale: WO 2021/148206

(56) Documents cités:
- WO-A1-2019/243374
- FR-A1- 2 826 731

## Description

La présente invention se rapporte au domaine des capteurs et notamment à un procédé d'identification desdits capteurs permettant de les différencier et de les situer, ainsi qu'à un dispositif permettant la mise œuvre dudit procédé.

Plus particulièrement, la présente invention s'applique avantageusement aux capteurs de pression logés dans des pneumatiques d'un véhicule automobile, capteurs généralement associés à l'ordinateur d'un véhicule automobile auquel lesdits capteurs transmettent des données.

L'ensemble capteurs-ordinateur de bord est ainsi désigné sous le terme « système électronique de contrôle de la pression des pneus » (ou en langue anglaise « Tire Pressure Monitoring System » avec pour sigle associé « TPMS »).

Chaque capteur de pression est classiquement équipé d'un émetteur à radiofréquences pour permettre la transmission de données à l'ordinateur de bord. L'ordinateur de bord recevant les données des capteurs peut ainsi alerter l'utilisateur du véhicule si l'un des pneus venait à crever ou se dégonfler, entrainant un risque pour sa sécurité.

Cependant, le capteur de pression logé dans la roue n'est ordinairement pas amovible, ainsi le changement d'une roue implique le changement du capteur, le nouveau capteur n'est alors plus détecté par l'ordinateur de bord du véhicule.

Il est donc nécessaire, lors du changement des pneus, d'appairer (ou associer) les capteurs logés dans les nouveaux pneus avec l'ordinateur de bord du véhicule.

Cet appairage se fait au moyen d'un dispositif d'apprentissage dédié (généralement désigné en langue anglaise sous le terme « TPMS tool »), ledit dispositif étant configuré pour activer les capteurs, récupérer et enregistrer les données pertinentes émises par le capteur, telles que l'identifiant du capteur, et les transmettre à l'ordinateur de bord, afin que ce dernier détecte et localise les capteurs logés dans les pneus nouvellement installés et puisse en capter les signaux, afin d'avertir l'usager en cas d'une chute de pression dans un desdits pneus.

Les documents de brevet WO2019243374 et FR2826731 décrivent des techniques d'identification de la position des capteurs logés dans les pneus du véhicule. Néanmoins, ces techniques sont relativement complexes et onéreuses à mettre en œuvre.

Cependant, dans certains véhicules, tels les poids lourds ou les bus, les roues sont montées par paires à chaque extrémité des essieux, on dit alors que les roues sont jumelées.

Dans des roues jumelées, les deux capteurs associés sont parfois très proches, rendant difficile la différenciation des émissions en provenance des capteurs (aussi bien à l'arrêt que pendant le fonctionnement du véhicule) sans mettre en œuvre des techniques de codage et d'identification particulièrement complexes et onéreuses.

Par exemple, lors de l'apprentissage, c'est-à-dire lors de la phase où l'on récupère les identifiants des capteurs pour les communiquer à l'ordinateur de bord du véhicule, on active séquentiellement les capteurs dans un ordre prédéterminé pour que l'ordinateur de bord identifie et associe les capteurs à chacune des roues du véhicule. Cependant, une activation simultanée de plusieurs capteurs peut être réalisée involontairement lorsqu'ils sont interrogés par l'opérateur au moyen de son dispositif d'activation de capteur (tel que le dispositif d'apprentissage). L'opérateur ne peut alors pas déterminer s'il y a activation du capteur logé dans la roue extérieure ou activation du capteur logé dans la roue intérieure.

Le problème d'activation simultanée de plusieurs capteurs se rencontre également dans les usines, telles qu'une usine de fabrication de pneu ou une usine de fabrication de véhicules automobiles, dans lesquelles il est nécessaire d'activer les capteurs pour les tester, les identifier et/ou les appairer à l'ordinateur de bord d'un véhicule. Cependant, les chaînes de fabrication dans les usines sont souvent très proches les unes des autres, et un signal d'activation émis par un dispositif adapté peut entrainer l'activation d'une pluralité de capteurs d'où la nécessité de pouvoir identifier ou discriminer les capteurs activés.

Les problématiques exposées ci-dessous ont mené à la conception d'un procédé d'identification des capteurs logés non seulement dans des roues jumelées, mais également dans des roues séparées, ainsi qu'à un dispositif capable de mettre en œuvre ledit procédé, tel qu'un dispositif pour système électronique de contrôle de la pression des pneus d'un véhicule automobile.

L'invention est ainsi un nouveau procédé d'identification de capteurs de pression, notamment de capteurs de pression pour système électronique de contrôle de la pression des pneus d'un véhicule automobile, lesdits capteurs comprenant au moins un module d'émission et de réception de données selon les caractéristiques définies dans la revendication indépendante de méthode 1 ci-jointe.

Comme expliqué ci-dessus, le procédé selon l'invention permet d'identifier ou discriminer les capteurs logés dans des roues jumelées ou dans des environnements comportant une pluralité de capteurs, celui présente l'avantage d'être simple à mettre en œuvre tout en étant applicable dans une grande diversité de situations.

En effet, l'atténuation préalable avant amplification permet « filtrer » une partie des signaux parasites, mais surtout de permettre de distinguer plus aisément des capteurs très proches l'un de l'autre.

Selon une caractéristique possible, la valeur représentative de puissance du signal est la valeur de gain et/ou la valeur d'adaptation dudit signal. Chacun des signaux est par exemple caractérisé par une valeur représentant l'adaptation et/ou le gain subie par chacun des signaux suite à son atténuation et à son amplification.

La valeur représentative de la puissance est un indicateur permettant de caractériser les signaux, cette valeur peut être le gain, la valeur d'adaptation, ou une combinaison et/ou fonction de ces paramètres, ceci en fonction de la situation des capteurs (immobiles ou en mouvement), et de leur environnement (signaux parasites, résonances, réflexions multiples des signaux, etc.). La valeur représentative, telle que la valeur d'adaptation, est par exemple fonction des réglages utilisés par le récepteur, ces réglages étant ainsi une représentation de la puissance du signal.

Selon une autre caractéristique possible, le signal d'activation des capteurs est émis à puissance constante.

Il est ainsi inutile de prévoir un composant permettant de faire varier la puissance d'émission des signaux d'activation des capteurs, et d'avoir une source d'alimentation dimensionnée en conséquence. Cela a pour conséquence de simplifier la conception du dispositif mettant en œuvre ledit procédé et de réduire son coût.

Selon une autre caractéristique possible, il y a réception d'une pluralité de signaux en provenance des mêmes capteurs.

La réception d'une pluralité de signaux en provenance d'un même capteur permet de rendre plus robuste le processus d'identification de capteurs, en ouvrant la possibilité d'appliquer un traitement statistique aux échantillons recueillis. La réception d'une pluralité de signaux permet également de sélectionner le signal dont la puissance est la plus grande (ou dont la valeur représentative est la plus grande) pour chacun des capteurs.

Généralement, la réception des signaux provenant de capteurs s'effectue pendant une durée déterminée, afin de recevoir plusieurs signaux des mêmes capteurs.

Chaque signal émis par un capteur comprend un identifiant propre au capteur, permettant la classification des signaux reçus. Selon une autre caractéristique possible, il y a sélection du signal présentant la valeur représentative de puissance la plus élevée pour chacun des capteurs pour ladite identification.

Selon une autre caractéristique possible, il y a comparaison des valeurs représentatives de puissance de la pluralité des signaux reçus provenant d'au moins un premier et un deuxième capteur, si l'ensemble des valeurs représentatives de puissance des signaux d'un des capteurs est toujours inférieur ou supérieur à l'ensemble des valeurs représentatives de puissance des signaux de l'autre capteur, alors il y a identification de la position spatiale d'au moins un des capteurs en fonction de la comparaison desdites valeurs représentatives de puissance des signaux.

Selon une autre caractéristique possible, les signaux reçus et/ou les valeurs représentatives de puissance des signaux provenant des mêmes capteurs sont moyennés et comparés entre eux, afin d'identifier la position spatiale d'au moins un des capteurs.

Selon une autre caractéristique possible, la répartition des valeurs représentatives de puissance des signaux reçus est étudiée pour chacun des capteurs, afin de déterminer une valeur représentative de puissance la plus caractéristique possible pour chacun des capteurs. Selon une autre caractéristique possible, les valeurs représentatives de puissance extrémales sont supprimées pour la détermination de la valeur représentative de puissance la plus caractéristique possible pour chacun des capteurs.

Selon une autre caractéristique possible, le niveau d'atténuation appliqué aux signaux est variable, par exemple ledit niveau varie linéairement dans le temps et/ou lors d'une durée déterminée de réception de plusieurs signaux.

La présente invention concerne également un dispositif d'activation de capteurs, notamment de capteurs de pression pour système électronique de contrôle de la pression des pneus d'un véhicule automobile selon les caractéristiques définies dans la revendication indépendante de dispositif 9 ci-jointe.

Selon une caractéristique possible, le dispositif d'activation de capteurs est un dispositif d'apprentissage pour système électronique de contrôle de la pression des pneus d'un véhicule automobile.

Selon une autre caractéristique possible, lesdits capteurs sont des capteurs de pression et/ou de température logés dans les pneumatiques d'un véhicule automobile.

Selon une autre caractéristique possible, chacun des signaux est caractérisé par une valeur représentant l'adaptation subie par chacun des signaux suite à son atténuation et à son amplification, la valeur représentative de puissance du signal étant la valeur d'adaptation dudit signal.

Ce procédé et ce dispositif sont très peu coûteux et particulièrement faciles à mettre en œuvre. Ils ne requièrent pas non plus de modification des technologies existantes de communication entre les dispositifs d'apprentissage et/ou d'activation et les capteurs.

L'invention sera mieux comprise, et d'autres buts, détails, caractéristiques et avantages de celles-ci apparaîtront plus clairement au cours de la description suivante de modes de réalisation particuliers de l'invention, donnée uniquement à titre illustratif et non limitatif, en référence aux dessins annexés, sur lesquels :
[Fig. 1] est une représentation schématique illustrant un dispositif d'activation de capteur selon l'invention ;
[Fig. 2] est une vue agrandie du dispositif de la figure 1;
[Fig. 3] est une représentation très schématique du dispositif de la figure 1 lors de son utilisation avec une des roues jumelées ;
[Fig. 4] est un logigramme détaillant des étapes du procédé d'identification de capteur selon l'invention.

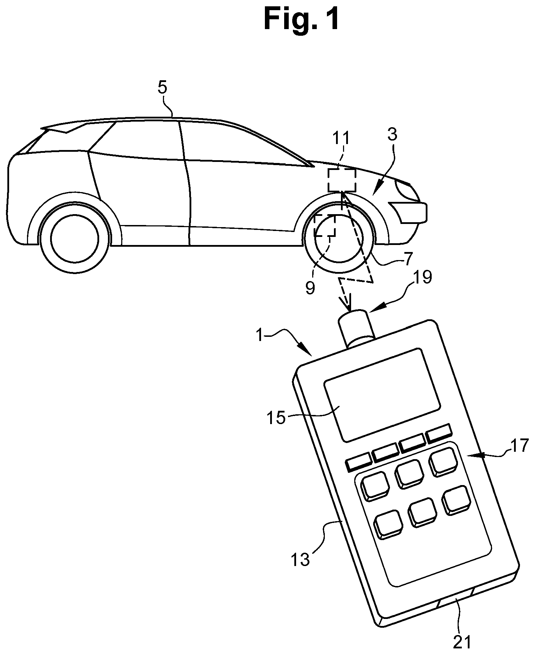

La figure 1 est une représentation très schématique d'un dispositif 1 d'activation de capteurs 9, plus particulièrement dans le présent exemple d'un dispositif 1 d'apprentissage pour système électronique 3 de contrôle de la pression des pneus d'un véhicule automobile 5 (ledit dispositif 1 pouvant également être désigné sous les termes « activateur de valves » ou encore « forceur de valves »).

Le véhicule automobile 5, d'une part, est équipé de pneus 7 dans lesquels sont logés les capteurs 9, tel que des capteurs de pression, et d'autre part, comprend un ordinateur de bord 11 (également appelé unité de commande électronique et désignée généralement sous le sigle « ECU »).

Le dispositif 1 comprend un boitier 13, par exemple en matière plastique, un dispositif d'affichage 15, un clavier 17 et une antenne 19 pour l'émission d'un signal d'activation de capteurs, ainsi qu'une prise OBD (désignant en langue anglaise « On Board Diagnostic » pour diagnostic embarqué). Ladite prise OBD 21 est configurée pour permettre par exemple le raccordement du dispositif 1 à l'ordinateur de bord 11 d'un véhicule, notamment par l'intermédiaire d'un câble OBD.

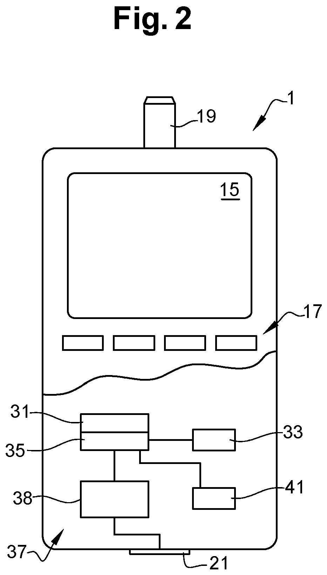

La figure 2, quant à elle, est une vue agrandie et de détail du dispositif de la figure 1.

Ledit dispositif 1 comprend ainsi :
- au moins un moyen d'activation 31 de capteurs, tels que des moyens permettant de générer des signaux (continus et/ou modulés) d'activation de capteurs, ledit moyen d'activation 31 comprenant l'antenne 19 qui permet notamment de propager au mieux lesdits signaux générés jusqu'aux capteurs 9 ;
- un moyen de réception 33 de signaux en provenance des capteurs, généralement une autre antenne logée dans le boitier 13 et configurée par exemple pour recevoir des signaux dans une bande fréquence entre 300 et 500 MHz (le capteur émettant un signal après avoir été activé par ledit moyen d'activation 31) ;
- une entité électronique 35 configurée pour stocker et/ou traiter des informations véhiculées par les signaux émis par lesdits capteurs 9 (et reçus par l'intermédiaire du moyen de réception 33) ;
- un moyen de communication 37 avec un ordinateur de bord 11 de véhicule automobile pour transmettre les informations d'au moins un desdits capteurs 9, informations reçues par l'intermédiaire de signaux provenant desdits capteurs 9.

Le moyen de communication 37 est par exemple un module OBD qui comprend un circuit de gestion 38 de la communication OBD et la prise OBD 21 précédemment mentionnée. On notera que le circuit de gestion 38 peut également être intégré dans l'entité électronique 35. Le dispositif 1 comprend également une batterie 41 configurée pour alimenter les différents éléments.

On notera, par ailleurs, que lesdits signaux d'activation sont des signaux électromagnétiques, continus ou modulés, émis par les moyens d'activation 31, qui présentent par exemple une fréquence de 125 kHz.

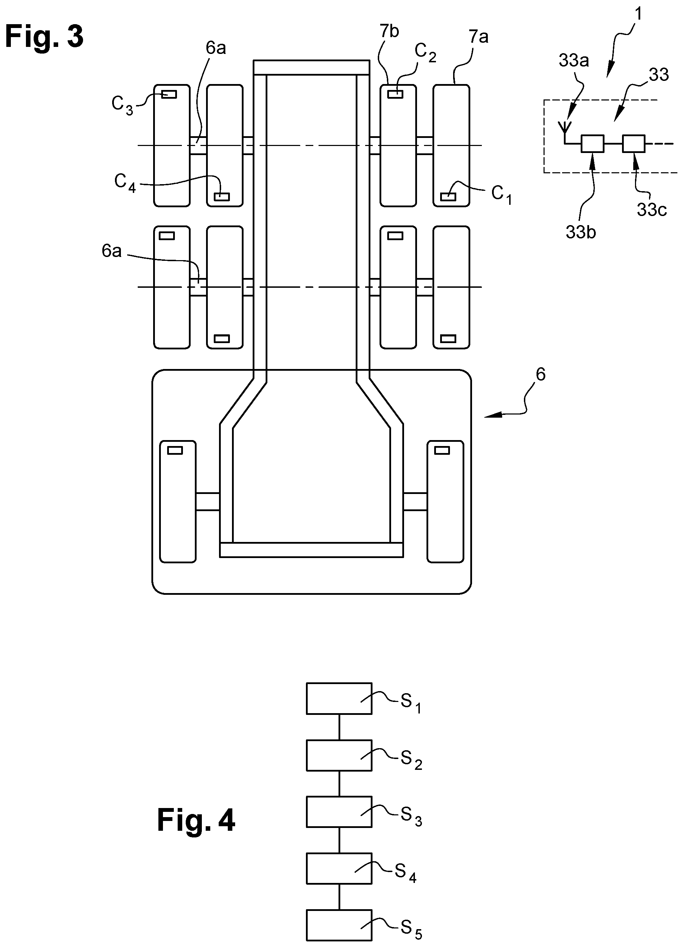

Comme illustré à la figure 3, ledit dispositif 1 est doit être également utilisable avec des camions comportant des roues jumelées, ledit dispositif 1 doit donc être apte à identifier ou différencier les capteurs logés dans ces pneumatiques disposés à proximité l'un de l'autre. Dans l'exemple illustré à la figure 3, le camion 6 comprend plusieurs roues dont des essieux 6a comprenant à leurs extrémités des roues jumelées 7a et 7b dans lesquelles sont logés des capteurs, respectivement C1 et C2. Le camion peut également comprendre deux autres capteurs C3 et C4 comme illustré sur cette figure 3.

Plus particulièrement, le moyen de réception 33 du dispositif 1 (moyen de réception des signaux en provenance des capteurs) comprend au moins trois éléments :
une antenne de réception 33a, ladite antenne étant configuré pour recevoir des signaux sur la fréquence d'émission desdits capteurs et transformer lesdits signaux électromagnétiques en signaux électriques ;
un atténuateur 33b, qui est par exemple un circuit ou composant électronique permettant de réduite l'amplitude du signal reçu, c'est-à-dire dans le cas d'espèce, le signal électrique délivrée par l'antenne 33a) ;
un amplificateur 33c, qui est par exemple un circuit ou composant électronique augmentant la tension et/ou l'intensité d'un signal électrique, dans le cas présent, le signal électrique atténué par l'atténuateur 33b.

Les signaux électriques, obtenus par atténuation et amplification successives, sont ensuite traités par l'entité électronique 35 (lecture, décodage, caractérisation, etc.).

Par ailleurs, on notera que l'atténuateur 33b est par exemple réglable par niveau, tel que 0 dB, -6 dB, -12 dB et -18 dB, ou être variable linéairement entre 0 dB et -18 dB.

L'amplificateur 33c est quant à lui configuré pour amplifier automatiquement au niveau voulu les signaux reçus en entrée pour que le composant situé en sortie de l'amplificateur (ici l'entité électronique 35) soit apte à traiter le signal amplifié. En effet, l'entité électronique 35 (le récepteur du signal ici) ne détecte et ne traite que des signaux présentant une amplitude minimale et un rapport signal sur bruit présentant un certain seuil.

L'amplificateur 33c ou un circuit tiers réalise donc un contrôle automatique du gain (également désigné sous l'acronyme « CAG » en langue française ou sous l'acronyme AGC en langue anglais pour « Automatic Gain Control ») permettant la gestion automatique de l'amplification de l'amplificateur et d'éviter une saturation de la sortie et/ou de garder constant le niveau de sortie.

Ainsi, ledit dispositif 1 émet un signal d'activation, par exemple, en direction des capteurs C1 et C2 logés dans des roues jumelées 7a et 7b du camion 6.

Les capteurs C1 et C2 sont activés par la réception du signal d'activation et lesdits capteurs C1 et C2 émettent alors un ou plusieurs signaux en réponse.

Malheureusement, le signal d'activation émis par le dispositif 1 peut également activer un ou plusieurs capteurs environnants, soient des d'autres capteurs du camion, soient des capteurs logés dans les pneumatiques de véhicules situés aux alentours.

Par ailleurs, les capteurs comprennent généralement un protocole de communication limitant la collision des signaux émis par lesdits capteurs, cela a notamment pour conséquence que le capteur le plus proche (celui recevant le signal d'activation théoriquement en premier) ne va pas forcément émettre en premier.

De plus, les capteurs logés dans des roues jumelées sont très proches l'un de l'autre et dans un environnement comportant des obstacles pouvant entrainer des réflexions multiples, cela peut avoir pour conséquence de faire varier la puissance des signaux émis par les capteurs.

Par la suite, le dispositif 1 reçoit les différents signaux émis par les capteurs C1 et C2, de préférence le dispositif 1 est configuré pour réceptionner l'ensemble des signaux émis par les capteurs pendant une durée prédéterminée. Cette durée prédéterminée est variable, mais avantageusement dimensionner pour que le dispositif reçoive au moins deux signaux en provenance de chacun des capteurs C1 et C2.

L'atténuateur 33b est configuré pour atténuer « fortement » les signaux reçus par l'intermédiaire de l'antenne 33a, l'atténuation est par exemple réglée pour atténuer les signaux de - 12 dB ou - 18 dB (respectivement la puissance des signaux reçus est divisée par 32 et 64).

Ceci permet de filtrer les signaux parasites, c'est-à-dire de signaux ne provenant pas des capteurs C1 et C2 ou issues de réflexions multiples (phénomène d'écho).

Par la suite, les signaux atténués sont amplifiés par l'amplificateur 33c.

L'amplificateur 33c est configuré pour amplifier les signaux en entrée à un certain niveau d'amplitude (ou de puissance), l'amplificateur 33c va donc amplifier automatiquement les signaux pour que ceux-ci présentent une même amplitude et/ou puissance en sortie. Les caractéristiques de sortie desdits signaux dépendent notamment des composants électroniques (capteur, etc.) en aval de l'amplificateur 33c et de leur configuration (c'est-à-dire quelles caractéristiques doivent présenter les signaux pour être traités par lesdits composants électroniques).

Ainsi, les signaux émis par les capteurs C1 et C2, présentant des signaux de puissances variables, sont atténués de manière identique et amplifiés à un niveau fixé (par exemple pour obtenir un rapport signal sur bruit déterminé).

Chacun des signaux amplifiés peut donc être caractérisé par un gain G qui est proportionnel à la puissance de signal reçu et l'atténuation appliquée par l'atténuateur 33b. La valeur du gain G est donc d'une valeur représentative de la puissance du signal. Cette atténuation et amplification successive permet de discriminer plus facilement deux capteurs proches.

En effet, si deux capteurs proches émettent chacun un signal A1 et B1 dont la différence de puissance n'est que de 20%, puissance de A1 = 1 et puissance de B1 = 0,8 ; alors une amplification, sans atténuation préalable, entraine des valeurs de gain faibles pour chacun des signaux et des différences entre les gains pour chacun des signaux qui ne sont pas forcément suffisamment significatives pour être utilisable dans l'identification de la position spatiale relative des capteurs les uns par rapport aux autres.

Par exemple, si la puissance de chacun des signaux doit atteindre une valeur de 1,25, le gain GA1 appliqué à A1 est de 1,25, tandis que le gain GB1 appliqué à B1 est d'environ 1,56 ; tandis que si chacun des signaux subit une atténuation préalable de -12 dB, la puissance des signaux A1 et B1 atténués est respectivement d'environ 0,0625 et 0,05 et leur gain est respectivement de 20 et 25. On constate ainsi qu'une forte atténuation avant amplification favorise l'identification des capteurs, ceci en se basant sur le fait que la puissance de signal émis par le facteur est proportionnel à son éloignement, la valeur du gain des signaux permet de déterminer le capteur le plus proche (ou le plus éloigné).

On notera que dans l'exemple ci-dessous, la valeur représentative de la puissance du signal est la valeur de gain appliqué au signal, mais cela peut être d'autres grandeurs caractéristiques ou une fonction dépendant de plusieurs paramètres (tels que l'atténuation, le gain, etc.).

Ainsi, le procédé d'identification mis en œuvre par le dispositif 1, plus particulièrement illustré à la figure 4, comprend au moins les étapes suivantes :
l'émission S1 d'un signal d'activation des capteurs ;
la réception S2 de signaux provenant d'au moins deux capteurs différents suite à leur activation,
l'atténuation et l'amplification S3 des signaux reçus en provenance desdits deux capteurs ;
   - la détermination d'une valeur représentative de la puissance du signal (S4), telle que la valeur de gain G, pour chacun des signaux reçus ;
   - l'identification de la position spatiale d'au moins un capteur S5 en fonction des valeurs représentatives de puissance desdits signaux reçus.

On notera que :
le signal d'activation des capteurs est de préférence émis à puissance constante et/ou présente un cône d'émission étroit ;
les signaux reçus subissent une atténuation identique.

Par ailleurs, l'entité électronique 35 est configurée pour gérer la durée de réception afin de recevoir une pluralité de signaux en provenance de mêmes capteurs.

De plus, comme chaque signal émis par un capteur comprend un identifiant propre au capteur, l'entité électronique 35 peut classifier les signaux reçus en fonction de leur provenance (c'est-à-dire du capteur qui a émis ledit signal). La réception de plusieurs signaux pour un même capteur peut par exemple permettre la sélection du signal présentant la valeur de gain G (ou une valeur représentative de puissance) la plus importante pour ensuite procéder à une comparaison et l'identification de la position spatiale relative entre deux capteurs.

Ainsi, en parallèle de la réception desdits signaux, l'entité électronique 35 compare deux à deux la valeur représentative de puissance des signaux reçus, et permet de vérifier que la valeur représentative de puissance des signaux émis par un capteur est toujours inférieure ou supérieure aux signaux émis par d'autres capteurs, si c'est le cas il y a identification de la position spatiale relative d'au moins un des capteurs ayant émis un signal.

Cette opération supplémentaire renforce les chances d'identifier correctement la position spatiale d'un capteur.

Cependant, afin d'améliorer encore l'identification des capteurs, on peut par exemple étudier la distribution, par capteur, des valeurs représentatives de puissance des signaux reçus, afin de déterminer une valeur de puissance la plus représentative possible de signal pour chacun des capteurs.

Les valeurs de signaux par capteurs sont par exemple catégorisées par intervalle de valeurs, également désigné sous le terme classe en mathématiques, c'est-à-dire que les valeurs extrémales permettent de délimiter des classes dans lesquelles les valeurs sont distribuées. On notera qu'on peut définir des classes présentant ou non une même amplitude (l'amplitude étant l'intervalle de valeurs définissant chaque classe).

Par la suite, il y a détermination du nombre de valeurs par classe et sélection de la classe comportant le plus grand nombre de valeurs (cette dernière est également désignée sous le terme « classe modale »)

L'intervalle comprenant le plus de valeurs est alors considéré comme le plus probable et on peut faire une moyenne des valeurs comprises dans cet intervalle pour déterminer une valeur représentative de puissance du signal la plus caractéristique possible pour chacun des capteurs., les valeurs caractéristiques par capteur étant ensuite comparée entre elles pour déterminer le capteur le plus proche (ou le plus loin) du moyen de réception 33.

On notera que quel que soit la méthode employée, celle-ci peut se généraliser à n capteurs, la comparaison et le classement de valeurs représentatives de puissance permettant de déterminer les positions spatiales relatives des capteurs, les uns par rapport aux autres, dont les signaux ont été reçus.

Dans un mode de réalisation non représentée, le niveau d'atténuation, généré par l'atténuateur 33b, appliqué aux signaux varie linéairement, par exemple dans le temps. Dans ce cas-là, la valeur représentative de puissance de signal est plutôt une valeur qui est fonction du gain et de l'atténuation, telle qu'une valeur d'adaptation de signal.

La variation linéaire de l'atténuation permet par ailleurs de mettre en évidence des phénomènes transitoires pouvant influer sur les signaux reçus et d'éliminer ceux-ci, afin d'améliorer l'identification des capteurs.

## Revendications

1. Procédé d'identification de capteurs de pression, notamment de capteurs de pression pour système électronique de contrôle de la pression des pneus d'un véhicule automobile, lesdits capteurs (9, C1, C2, C3, C4) comprenant au moins un module d'émission et de réception de données,
ledit procédé comprenant :
- une émission (S1) d'un signal d'activation de capteurs ;
- une réception (S2) de signaux provenant d'au moins deux capteurs différents suite à leur activation ;
- une atténuation et une amplification (S3) des signaux reçus ;
- une détermination (S4) d'une valeur représentative de la puissance du signal pour chacun des signaux reçus après atténuation et amplification ;
- une identification (S5) de la position spatiale d'au moins un capteur en fonction des valeurs représentatives de puissance desdits signaux reçus
la réception (S2) des signaux est réalisée pendant une durée prédéterminée, **caractérisé en ce que** lesdits signaux reçus sont atténués de manière identique et amplifiés à un niveau fixé.

2. Procédé selon la revendication précédente, **caractérisé en ce que** la valeur représentative de puissance du signal est la valeur de gain (G) et/ou la valeur d'adaptation dudit signal.

3. Procédé selon la revendication 1 ou 2, **caractérisé en ce que** le signal d'activation des capteurs (9, C1, C2, C3, C4) est émis à puissance constante.

4. Procédé selon la revendication précédente, **caractérisé en ce que** les signaux subissent une atténuation identique.

5. Procédé selon l'une quelconque des revendications précédentes, **caractérisé en ce qu'**il y a réception d'une pluralité de signaux en provenance des mêmes capteurs (9, C1, C2, C3, C4).

6. Procédé selon la revendication précédente, **caractérisé en ce qu'**il y a sélection du signal présentant la valeur représentative de puissance la plus élevée pour chacun des capteurs (9, C1, C2, C3, C4) pour ladite identification.

7. Procédé selon la revendication précédente, **caractérisé en ce qu'**il y a comparaison des valeurs représentatives de puissance de la pluralité des signaux reçus provenant d'au moins un premier (9, C1) et un deuxième capteur (9, C2),
si l'ensemble des valeurs représentatives de puissance des signaux d'un des capteurs (9, C1, C2) est toujours inférieur ou supérieur à l'ensemble des valeurs représentatives de puissance des signaux de l'autre capteur (9, C1, C2),
alors il y a identification de la position spatiale d'au moins un des capteurs (9, C1, C2).

8. Procédé selon l'une quelconque des revendications précédentes, **caractérisé en ce que** le niveau d'atténuation appliqué aux signaux est variable.

9. Dispositif (1) d'activation de capteurs, notamment de capteurs de pression (9, C1, C2, C3, C4) pour système électronique de contrôle de la pression des pneus d'un véhicule automobile, ledit dispositif étant configuré pour mettre en œuvre le procédé selon l'une quelconque des revendications précédentes, et comprenant :
au moins un moyen d'activation (31) de capteurs ;
un moyen de réception (33) de signaux en provenance des capteurs ;
une entité électronique (35) configurée pour stocker et/ou traiter des informations véhiculées par les signaux émis par lesdits capteurs (9) ;
un moyen de communication (37) avec une entité électronique distante, tel que l'ordinateur de bord (11) d'un véhicule automobile, afin de transmettre les informations issues des signaux reçus ;
ledit moyen de réception (33) comprend :
une antenne de réception (33a) des signaux provenant des capteurs (9, C1, C2, C3, C4) ;
**caractérisé en ce que** ledit moyen de réception (33) comprend un atténuateur (33b) configuré pour atténuer les signaux reçus de manière identique,
un amplificateur (33c) configuré pour amplifier les signaux reçus atténués à un niveau fixé;
chacun des signaux étant **caractérisés par** une valeur représentative de puissance (G) ; ladite entité électronique (35) étant configurée pour identifier la position spatiale d'au moins un capteur (9, C1, C2, C3, C4) en fonction des valeurs représentatives de la puissance des signaux reçus.

10. Dispositif selon la revendication précédente, **caractérisé en ce que** chacun des signaux est **caractérisé par** une valeur représentant l'adaptation subie par chacun des signaux suite à son atténuation et à son amplification, la valeur représentative de puissance du signal étant la valeur d'adaptation dudit signal.

## Patentansprüche

1. Verfahren zur Identifizierung von Drucksensoren, insbesondere von Drucksensoren für ein elektronisches System zur Kontrolle des Reifendrucks eines Kraftfahrzeugs, wobei die Sensoren (9, C1, C2, C3, C4) mindestens ein Modul zum Senden und Empfangen von Daten umfassen,
wobei das Verfahren umfasst:
- eine Sendung (S1) eines Aktivierungssignals von Sensoren;
- ein Empfang (S2) von Signalen von mindestens zwei verschiedenen Sensoren nach deren Aktivierung;
- eine Dämpfung und Verstärkung (S3) der empfangenen Signale;
- eine Bestimmung (S4) eines Wertes, der die Leistung des Signals für jedes der empfangenen Signale nach Dämpfung und Verstärkung darstellt;
- eine Identifizierung (S5) der räumlichen Position mindestens eines Sensors in Abhängigkeit von den Werten, welche die Leistung der empfangenen Signale darstellen, wobei der Empfang (S2) der Signale über eine vorbestimmte Dauer erfolgt, **dadurch gekennzeichnet, dass** die empfangenen Signale auf identische Weise gedämpft und auf ein festgelegtes Niveau verstärkt werden.

2. Verfahren nach dem vorhergehenden Anspruch, **dadurch gekennzeichnet, dass** der Wert, der die Leistung des Signals darstellt, der Verstärkungswert (G) und/oder der Anpassungswert des Signals ist.

3. Verfahren nach Anspruch 1 oder 2, **dadurch gekennzeichnet, dass** das Aktivierungssignal der Sensoren (9, C1, C2, C3, C4) mit konstanter Leistung gesendet wird.

4. Verfahren nach dem vorhergehenden Anspruch, **dadurch gekennzeichnet, dass** die Signale einer identischen Dämpfung unterliegen.

5. Verfahren nach dem der vorhergehenden Ansprüche, **dadurch gekennzeichnet, dass** eine Mehrzahl von Signalen von denselben Sensoren (9, C1, C2, C3, C4) empfangen wird.

6. Verfahren nach dem vorhergehenden Anspruch, **dadurch gekennzeichnet, dass** das Signal mit dem höchsten Wert, der die Leistung darstellt, für jeden der Sensoren (9, C1, C2, C3, C4) für die Identifizierung ausgewählt wird.

7. Verfahren nach dem vorhergehenden Anspruch, **dadurch gekennzeichnet, dass** die Werte, welche die Leistung der Mehrzahl der empfangenen Signale darstellen, von mindestens einem ersten (9, C1) und einem zweiten Sensor (9, C2) verglichen werden, wobei, wenn die Gesamtheit der Werte, welche die Leistung der Signale eines der Sensoren (9, C1, C2) darstellen, immer niedriger oder höher ist als die Gesamtheit der Werte, welche die Leistung der Signale des anderen Sensors (9, C1, C2) darstellen, dann die räumliche Position mindestens eines der Sensoren (9, C1, C2) identifiziert wird.

8. Verfahren nach einem der vorhergehenden Ansprüche, wobei das auf die Signale angewendete Dämpfungsniveau veränderlich ist.

9. Vorrichtung (1) zur Aktivierung von Sensoren, insbesondere von Drucksensoren (9, C1, C2, C3, C4) für ein elektronisches System zur Kontrolle des Reifendrucks eines Kraftfahrzeugs, wobei die Vorrichtung dazu eingerichtet ist, um das Verfahren nach einem der vorhergehenden Ansprüche durchzuführen, und umfasst:
mindestens ein Mittel (31) zur Aktivierung von Sensoren;
ein Mittel (33) zum Empfang von Signalen der Sensoren;
eine elektronische Einheit (35), die dazu eingerichtet ist, um Informationen zu speichern und/oder zu verarbeiten, die von den von den Sensoren (9) gesendeten Signalen übertragen werden;
ein Kommunikationsmittel (37) mit einer entfernten elektronischen Einheit, wie dem Bordcomputer (11) eines Kraftfahrzeugs, um die aus den empfangenen Signalen stammenden Informationen zu übertragen;
wobei das Empfangsmittel (33) umfasst:
eine Empfangsantenne (33a) für Signale von den Sensoren (9, C1, C2, C3, C4);
**dadurch gekennzeichnet, dass**
ein Dämpfer (33b) dazu eingerichtet ist, um die empfangenen Signale auf identische Weise zu dämpfen,
ein Verstärker (33c) dazu eingerichtet ist, um die gedämpften empfangenen Signale auf ein festgelegtes Niveau zu verstärken;
wobei jedes der Signale durch einen Wert gekennzeichnet ist, der die Leistung (G) darstellt; wobei die elektronische Einheit (35) dazu eingerichtet ist, um die räumliche Position mindestens eines Sensors (9, C1, C2, C3, C4) in Abhängigkeit von den Werten zu identifizieren, welche die Leistung der empfangenen Signale darstellen.

10. Vorrichtung nach dem vorhergehenden Anspruch, **dadurch gekennzeichnet, dass** jedes der Signale durch einen Wert gekennzeichnet ist, der die Anpassung darstellt, die jedes der Signale nach seiner Dämpfung und Verstärkung erfahren hat, wobei der Wert, der die Leistung des Signals darstellt, der Anpassungswert des Signals ist.

## Claims

1. Method for identifying pressure sensors, in particular pressure sensors for an electronic tire pressure monitoring system of a motor vehicle, said sensors (9, C1, C2, C3, C4) comprising at least one module for emitting and receiving data,
said method comprising:
- emission (S1) of a sensor activation signal;
- reception (S2) of signals coming from at least two different sensors after they have been activated;
- attenuation and amplification (S3) of the signals received;
- determination (S4) of a value indicative of the power of the signal for each of the signals received;
- identification (S5) of the spatial position of at least one sensor on the basis of the values indicative of the power of said signals received.
the reception ( S2) of signals being done during a predetermined period
**characterised in that** said signals are attenuated in an identical manner and amplified at a fixed level.

2. Method according to the preceding claim, **characterised in that** the value indicative of the power of the signal is the gain value (G) and/or the adaptation value of said signal.

3. Method according to claim 1 or 2, **characterised in that** the signal activating the sensors (9, C1, C2, C3, C4) is transmitted at constant power.

4. Method according to the preceding claim, **characterised in that** the signals undergo an identical attenuation.

5. Method according to any of the preceding claims, **characterised in that** there is reception of a plurality of signals coming from the same sensors (9, C1, C2, C3, C4).

6. Method according to previous claim, **characterised in that** there is selection of the signal having the value indicative of power that is the highest for each of the sensors (9, C1, C2, C3, C4) for said identification.

7. Method according to the preceding claim, **characterised in that** there is comparison of the values indicative of the power of the plurality of the signals received coming from at least a first (9, C1) and a second sensor (9, C2),
if all the values indicative of the power of the signals of one of the sensors (9, C1, C2) is always less than or greater than all the values indicative of the power of the signals of the other sensor (9, C1, C2),
then there is identification of the spatial position of at least one of the sensors (9, C1, C2).

8. Method according to any of the preceding claims, **characterised in that** the attenuation level applied to the signals is variable.

9. Device (1) for activating sensors, in particular pressure sensors (9, C1, C2, C3, C4) for an electronic tire pressure monitoring system on a motor vehicle, said device being configured to implement the method according any of the preceding claims and comprising:
at least one sensor activation means (31);
a means (33) for receiving signals coming from the sensors;
an electronic entity (35) configured for storing and/or processing information conveyed by the signals sent by said sensors (9);
a means for communicating (37) with a remote electronic entity, such as the onboard computer (11) of a motor vehicle, in order to transmit the information coming from the signals received;
said reception means (33) comprises:
an antenna (33a) for receiving the signals coming from the sensors (9, C1, C2, C3, C4);
**characterised in that** said reception means (33) comprises an attenuator (33b) configured for attenuating the signals received in a identical manner,
an amplifier (33c) configured for amplifying signals received attenuated at a fixed level;
each of the signals being **characterised by** a value indicative of power (G);
said electronic entity (35) being configured for identifying the spatial position of at least one sensor (9, C1, C2, C3, C4) on the basis of the values indicative of the power of the signals received.

10. Device according to the preceding claim, **characterised in that** each of the signals is **characterised by** a value indicative of the adaptation undergone by each of the signals following the attenuation and amplification thereof, the value indicative of the power of the signal being the adaptation value of said signal.
